# EUROPÄISCHE PATENTSCHRIFT

(11) **EP 1 004 167 B1**
(45) Veröffentlichungstag und Bekanntmachung des Hinweises auf die Patenterteilung: **03.12.2003**
(21) Anmeldenummer: 98946254.4
(22) Anmeldetag: 05.08.1998
(51) Int. Cl.: H03L 7/07

(54) **VERFAHREN ZUR AUFRECHTERHALTUNG DURCH EINE HOHE TAKTFREQUENZ VORGEGEBENEN ZEITRASTERS DURCH EINE NIEDRIGE TAKTFREQUENZ**
METHOD AND DEVICE FOR MAINTAINING A TIME GRID DEFINED BY A HIGH CLOCK FREQUENCY BY MEANS OF A LOW CLOCK FREQUENCY
PROCEDE ET DISPOSITIF POUR CONSERVER UNE TRAME TEMPORELLE PREDETERMINEE PAR UNE FREQUENCE D'HORLOGE ELEVEE, AU MOYEN D'UNE FAIBLE FREQUENCE D'HORLOGE

(30) Priorität: 08.08.1997 DE 19734432
(43) Veröffentlichungstag der Anmeldung: 31.05.2000
(73) Patentinhaber: SIEMENS AKTIENGESELLSCHAFT, 80333 München (DE)
(72) Erfinder: MEYER, Jan, D-82362 Weilheim (DE); HOFMANN, Ludwig, D-85304 Ilmmünster (DE); LILLIE, Frank, D-80337 München (DE)
(86) Internationale Anmeldenummer: DE9802244
(87) Internationale Veröffentlichungsnummer: WO99008385

(56) Entgegenhaltungen:
- EP-A- 0 726 687
- EP-A- 0 851 593
- GB-A- 2 320 398

## Beschreibung

Die vorliegende Erfindung betrifft ein Verfahren und eine Vorrichtung zur Aufrechterhaltung eines durch eine hohe Taktfrequenz vorgegebenen Zeitrasters, wobei für eine Umschalt-Zeitdauer im wesentlichen auf eine niedrige Taktfrequenz umgeschaltet wird. Eine solche Taktfrequenzsteuerung gemäß den Oberbegriffen der unabhängigen Ansprüche 1 und 8 ist aus EP 726 687 bekannt.

Um mit einem Mobilfunktelefon jederzeit erreichbar zu sein, ist es notwendig, das Mobilfunktelefon im sogenannten Standby-Mode (paging) zu betreiben. In diesem Mode werden in einem genauen, vorgegebenen Zeitraster Informationen über die Luftschnittstelle von der jeweiligen Basisstation empfangen. Im TDMA-Verfahren des GSM-Standards ist das Zeitraster zum Beispiel durch eine Rahmenlänge von ca. 4,6 ms vorgegeben. In den von der Basisstation empfangenen Informationen wird ein ankommender Anruf signalisiert. Diese Informationsblöcke mit Signalisierungsdaten können bis zu mehrere Sekunden auseinander liegen, müssen aber dann wieder im vorgegebenen Zeitraster mit einer Genauigkeit im µs-Bereich empfangen werden.

Um diesen Empfang von Informationen exakt zu gewährleisten, bleibt im Mobilfunktelefon im allgemeinen ein hochgenauer, hochfrequenter Taktfrequenzgeber permanent eingeschaltet. Bei den GSM-Mobiltelefonen der Anmelderin ist dieser Taktfrequenzgeber ein spannungsgesteuerter und temperaturkompensierter Quarzoszillator, der eine hohe Taktfrequenz von etwa 13 MHz erzeugt. Ein derartiger hochfrequenter Quarzoszillator hat einen relativ hohen Stromverbrauch, was insbesondere bei batterie- oder akkubetriebenen Mobilfunktelefonen eines Mobilfunksystems nachteilig für die Betriebsdauer ist. Der hochfrequente Quarzoszillator ist über einen Regelalgorithmus an die Basisstation gekoppelt. Die Basisstation liefert einen Referenzburst für diese Frequenzregelung des Quarzoszillators zur Aufrechterhaltung der Synchronisation zwischen der Mobilstation und der Basisstation.

Somit ist die Aufgabe der vorliegenden Erfindung, ein Verfahren und eine Vorrichtung zur Aufrechterhaltung eines durch eine schnelle Taktfrequenz vorgegebenen Zeitrasters zu liefern, bei denen unter Aufrechterhaltung des Zeitrasters eine Verringerung des Stromverbrauchs eines die schnelle Taktfrequenz erzeugenden Taktfrequenzgebers ermöglicht ist.

Diese Aufgabe wird durch ein Verfahren zur Aufrechterhaltung eines durch eine von einem ersten Taktfrequenzgeber erzeugte schnelle Taktfrequenz vorgegebenen Zeitrasters gemäß den Merkmalen des Anspruches 1 und durch eine Vorrichtung zur Aufrechterhaltung eines durch eine schnelle Taktfrequenz vorgegebenen Zeitrasters gemäß den Merkmalen des Anspruches 8 gelöst.

Das erfindunasgemäße Verfahren betrifft die Aufrechterhaltung eines durch eine von einem ersten Taktfrequenzgeber erzeugte hohe Taktfrequenz vorgegebenen Zeitrasters, wobei für eine Umschalt-Zeitdauer im wesentlichen.auf eine von einem zweiten Taktfrequenzgeber erzeugte niedrige Taktfrequenz umgeschaltet wird, mit den Schritten:
a) Abgleichen der niedrigen und der schnellen Taktfrequenz während einem Abgleich-Zeitraum,
b) Starten eines Zählers für die hohe Taktfrequenz,
c) Anhalten des Zählers für die hohe Taktfrequenz in Abhängigkeit von der niedrigen Taktfrequenz unter Festlegung eines Zwischenwertes und unmittelbar darauffolgendes
d) Starten eines Zählers für die niedrige Taktfrequenz,
e) Deaktivieren des ersten Taktfrequenzgebers,
f) Anhalten des Zählers für die niedrige Taktfrequenz bei einem ersten Endwert, der auf der Basis eines beim Abgleichen verwendeten vorbestimmten ersten Abgleich-Endwertes ermittelt wurde, nach dem Aktivieren des ersten Taktfrequenzgebers und unmittelbar darauffolgendes
g) erneutes Starten des Zählers für die hohe Taktfrequenz ab dem Zwischenwert, und
h) Anhalten des Zählers für die hohe Taktfrequenz bei einem zweiten Endwert, der auf der Basis eines beim Abgleichen erhaltenen Referenzwertes für die hohe Taktfrequenz ermittelt wurde.

Die erfindungsgemäße Vorrichtung dient zur Aufrechterhaltung eines durch eine hohe Taktfrequenz vorgegebenen Zeitrasters, wobei für eine Umschalt-Zeitdauer im wesentlichen auf eine niedrige Taktfrequenz umgeschaltet wird, und umfaßt einen Taktfrequenzgeber für die hohe Taktfrequenz, einen Taktfrequenzgeber für die niedrige Taktfrequenz, einen Zähler für die hohe Taktfrequenz, einen Zähler für die niedrige Taktfrequenz und eine Ablaufsteuerung zum
a) Abgleichen der niedrigen und der hohen Taktfrequenz während einem Abgleich-Zeitraum,
b) Starten des Zählers für die hohe Taktfrequenz,
c) Anhalten des Zählers für die hohe Taktfrequenz in Abhängigkeit von der niedriegen Taktfrequenz unter Festlegung eines Zwischenwertes und unmittelbar darauffolgendes
d) Starten des Zählers für die niedrige Taktfrequenz,
e) Deaktivieren des ersten Taktfrequenzgebers,
f) Anhalten des Zählers für die niedrige Taktfrequenz bei einem ersten Endwert, der auf der Basis eines beim Abgleichen verwendeten vorbestimmten ersten Abgleich-Endwertes ermittelt wurde, nach dem Aktivieren des ersten Taktfrequenzgebers und unmittelbar darauffolgendes
g) erneutes Starten des Zählers für die hohe Taktfrequenz ab dem Zwischenwert, und
h) Anhalten des Zählers für die hohe Taktfrequenz bei einem zweiten Endwert, der auf der Basis eines beim Abgleichen erhaltenen Referenzwertes für die hohe Taktfrequenz ermittelt wurde.

Das erfindungsgemäße Verfahren und die erfindungsgemäße Vorrichtung ermöglichen es, beispielsweise in einer Mobilstation eines Mobilfunksystems, das Zeitraster im Stand-by-Mode (paging) zwischen den Empfangsblöcken der Signalisierungsdaten beispielsweise mit Hilfe einer niederfrequenten Uhrenoszillatorschaltung aufrechtzuerhalten. Eine Uhrenoszillatorschaltung hat eine im Vergleich zur normalen Taktfrequenz von 13 MHz üblicher Mobilfunksysteme eine relativ niedrige Frequenz von 32,768 kHz. Eine solche Uhrenoszillatorschaltung hat den großen Vorteil eines geringen Preises, da sie ein Massenprodukt ist, und eines extrem geringen Stromverbrauchs. Weiterhin sind Mobilstationen bereits teilweise mit einer derartigen Uhrenoszillatorschaltung als Echtzeituhr versehen, so daß in diesem Fall bereits in den Geräten vorhandene Uhrenoszillatorschaltungen verwendet werden können. Die Erfindung ist jedoch nicht auf die Anwendung in Mobilstationen von Mobilfunksystemen beschränkt, sondern erlaubt in allgemeiner vorteilhafter Weise die Aufrechterhaltung eines durch eine hohe Taktfrequenz vorgegebenen Zeitrasters durch eine niedrige Taktfrequenz.

Durch die Übernahme des Zeitrasters durch eine niedrige Taktfrequenz ist es möglich, hochgenaue und einen hohen Stromverbrauch aufweisende Taktfrequenzgeber für eine hohe Taktfrequenz temporär abzuschalten und die Aufrechterhaltung des Zeitrasters auf billige und einen niedrigen Stromverbrauch aufweisende Taktfrequenzgeber für niedrige Taktfrequenzen zu übertragen.

Die vorliegende Erfindung löst dabei insbesondere bei ihrer Anwendung auf Mobilstationen das Problem der exakten Aufrechterhaltung der Synchronisation der Mobilstation mit der jeweiligen Basisstation bei der Anwendung eines relativ niederfrequenten Oszillators. Dieses Problem resultiert zum einen aus der im Vergleich zur Frequenz von 13 MHz sehr niedrigen Frequenz von 32,768 kHz einer üblichen Uhrenoszillatorschaltung und des damit verbundenen Zeitintervalls von 30,5 µs und zum anderen aus der üblicherweise geringen Frequenzstabilität des Uhrenoszillators (beispielsweise ± (50-100) ppm), wodurch ein Frequenzabgleich unumgänglich ist. Ein weiteres Problem ist, daß die hohe Taktfrequenz und die niedrige Taktfrequenz in der Regel weder einen Phasen- noch einen Frequenzbezug aufweisen.

Vorteilhafterweise wird deshalb beim erfindungsgemäßen Verfahren ein Abgleich der niedrigen und der hohen Taktfrequenz mit folgenden Schritten durchgeführt werden:
a1) Starten des Zählers für die hohe Taktfrequenz gleichzeitig mit einem Referenzzähler für die hohe Taktfrequenz,
a2) Anhalten des Zählers für die hohe Taktfrequenz in Abhängigkeit von der niedrigen Taktfrequenz unter Festlegung eines Abgleich-Zwischenwertes und unmittelbar darauffolgendes
a3) Starten des Zählers für die langsame Taktfrequenz,
a4) Anhalten des Zählers für die langsame Taktfrequenz bei dem vorbestimmten ersten Abgleich-Endwert und unmittelbar darauffolgendes
a5) erneutes Starten des Zählers für die hohe Taktfrequenz ab dem Abgleich-Zwischenwert, und
a6) Anhalten des Zählers für die hohe Taktfrequenz gleichzeitig mit dem Referenzzähler für die hohe Taktfrequenz einem für den Referenzzähler vorbestimmten dem Abgleich-Zeitraum entsprechenden zweiten Abgleich-Endwert, wobei der Zählerstand des Zählers für die hohe Taktfrequenz als Referenzwert für die hohe Taktfrequenz festgelegt wird.

Die erfindungsgemäße Vorrichtung weist entsprechend vorteilhafterweise einen Referenzzähler für die hohe Taktfrequenz auf, wobei die Ablaufsteuerung beim Abgleichen der niedrigen und der hohen Taktfrequenz folgende Schritte durchführt:
a1) Starten des Zählers für die schnelle Taktfrequenz gleichzeitig mit dem Referenzzähler für die schnelle Taktfrequenz,
a2) Anhalten des Zählers für die hohe Taktfrequenz in Abhängigkeit von der niedrigen Taktfrequenz unter Festlegung eines Abgleich-Zwischenwertes und unmittelbar darauffolgendes
a3) Starten eines Zählers für die niedrige Taktfrequenz,
a4) Anhalten des Zählers für die niedrige Taktfrequenz bei dem vorbestimmten ersten Abgleich-Endwert und unmittelbar darauffolgendes
a5) erneutes Starten des Zählers für die hohe Taktfrequenz ab dem Abgleich-Zwischenwert, und
a6) Anhalten des Zählers für die hohe Taktfrequenz gleichzeitig mit dem Referenzzähler für die hohe Taktfrequenz bei einem für den Referenzzähler vorbestimmten dem Abgleich-Zeitraum entsprechenden zweiten Abgleich-Endwert, wobei der Zählerstand des Zählers für die hohe Taktfrequenz als Referenzwert für die hohe Taktfrequenz festgelegt wird.

Vorteilhafterweise hält die Ablaufsteuerung den Zähler für die hohe Taktfrequenz in den Schritten c) und/oder a2) bei der nächsten positiven Flanke der niedrigen Taktfrequenz nach dem Starten des Zählers für die hohe Taktfrequenz an.

Wie oben bereits angedeutet wurde, finden das erfindungsgemäße Verfahren und die erfindungsgemäße Vorrichtung vorteilhafterweise in einer Mobilstation eines Mobilfunksystems Verwendung. Wenn das Mobilfunksystem auf dem GSM-Standard beruht, ist die Länge der Umschalt-Zeitdauer ein ganzzahliges Vielfaches m der GSM-Rahmenlänge und die Länge des Abgleich-Zeitraums ein ganzzahliges Vielfaches n der GSM-Rahmenlänge. Die GSM-Rahmenlänge beträgt dabei ca 4,6 ms. Zur Erhöhung der Genauigkeit ist es dabei vorteilhaft, wenn die Ablaufsteuerung den ersten Endwert durch Teilen des vorbestimmten ersten Abgleich-Endwertes durch n und durch Multiplizieren mit m und den zweiten Endwert durch Teilen des beim Abgleichen erhaltenen Referenzwertes durch n und durch Multiplizieren mit m ermittelt.

Dabei kann es vorteilhaft sein, wenn die Ablaufsteuerung einen beim Teilen des ersten und/oder zweiten Endwertes durch n auftretenden Teilungsrest mit m multipliziert und unmittelbar nach Schritt h) einen Restzähler startet und ihn bei dem mit m multiplizierten Teilungsrest anhält, um den Umschalt-Zeitraum exakt auszufüllen.

Die vorliegende Erfindung liefert somit eine komplette Lösung, die beispielsweise als anwenderspezifischer Baustein in einem Mobiltelefon realisiert werden kann. Der Prozessor im Mobiltelefon wird durch die Umschaltung zu einem anderen Taktsystem nicht mit rechenintensiven Umrechnungen der beiden Taktfrequenzgeber belastet. Die exakte Frequenz des 32,768 kHz-Oszillator und der fehlende Phasenbezug der beiden Taktfrequenzgeber zueinander wird automatisch vermessen und berücksichtigt. Die Aufgabe der Software im Mobiltelefon ist lediglich das synchrone Starten des Umschaltens und die Vorgabe der Zeit, die umgeschaltet werden soll, in Vielfachen von TDMA-Rahmen für den Fall eines GSM-Systems.

Die vorliegende Erfindung wird im folgenden anhand eines bevorzugten Ausführungsbeispiels unter Bezug auf die beigefügten Zeichnungen näher erläutert, in denen zeigen:
Fig. 1 eine schematische Darstellung einer Vorrichtung zur Aufrechterhaltung eines durch eine hohe Taktfrequenz vorgegebenen Zeitrasters durch eine niedrige Taktfrequenz gemäß der vorliegenden Erfindung, und
Fig. 2 schematisch die Zusammenhänge der hohen Taktfrequenz und der niedrigen Taktfrequenz in einer vorgegebenen Umschalt-Zeitdauer.

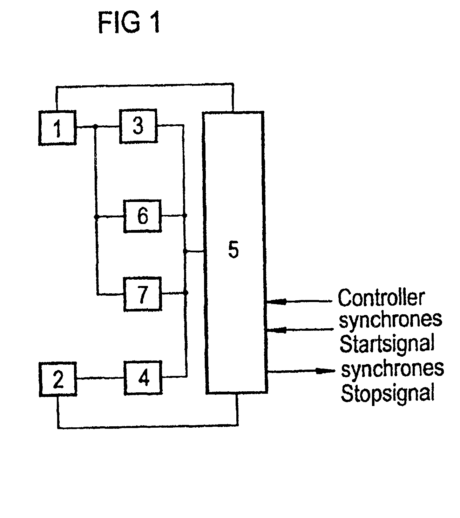

In Fig. 1 ist eine schematische Darstellung einer Vorrichtung zur Aufrechterhaltung eines durch eine hohe Taktfrequenz vorgegebenen Zeitrasters durch eine niedrige Taktfrequenz dargestellt. Die erfindungsgemäße Vorrichtung umfaßt einen Taktfrequenzgeber 1 für die hohe Taktfrequenz und einen Taktfrequenzgeber 2 für die niedrige Taktfrequenz. Bei einer im GSM-Standard betriebenen Mobilstation beträgt die hohe Taktfrequenz beispielsweise ca. 13 MHz und die niedrige Taktfrequenz beträgt beispielsweise 32,768 kHz. Der Taktfrequenzgeber 1 für die hohe Taktfrequenz ist mit einem Zähler 3 für die hohe Taktfrequenz verbunden, und der Taktfrequenzgeber 2 für die niedrige Taktfrequenz ist mit einem Zähler 4 für die niedrige Taktfrequenz verbunden. Weiterhin umfaßt die erfindungsgemäße Vorrichtung im dargestellten Ausführungsbeispiel einen Referenzzähler 6 für die schnelle Taktfrequenz, der beim Abgleichen der niedrigen und der hohen Taktfrequenz zur Vorgabe des Abgleich-Zeitraumes Verwendung findet, sowie einen Restzähler 7 für die hohe Taktfrequenz zur Erhöhung der Exaktheit der Umschaltung auf die niedrige Taktfrequenz, wenn beim Abgleichen ein ganzzahliges Vielfaches von GSM-Rahmen als Abgleich-Zeitraum verwendet wird.

Der Taktfrequenzgeber 1 für die hohe Taktfrequenz, der Taktfrequenzgeber 2 für die niedrige Taktfrequenz, der Zähler 3 für die hohe Taktfrequenz, der Zähler 4 für die niedrige Taktfrequenz, der Referenzzähler 6 für die hohe Taktfrequenz und der Restzähler 7 für die hohe Taktfrequenz sind mit einer Ablaufsteuerung 5 verbunden, die das erfindungsgemäße Verfahren und die erfindungsgemäße Vorrichtung steuert.

Im dargestellten und erläuterten Ausführungsbeispiel basiert das erfindungsgemäße Verfahren darauf, daß der zu vermessende bzw. anschließend zu vervielfältigende Zeitraum in einer Anzahl niederfrequenter (32,768 kHz) Takte und eine Anzahl hochfrequenter (13 MHz) Takte besteht. Das Ausmessen bzw. Abgleichen der Frequenz des Taktfrequenzgebers 2 für die niedrige Taktfrequenz wird beispielsweise in einer Mobilstation des GSM-Standards über mehrere TDMA-Rahmen (GSM-Rahmen) durchgeführt, beispielsweise 16. Das ist notwendig, um die geforderte Genauigkeit zu erreichen. Der exakte Zeitraum von 16 TDMA-Rahmen wird durch den Referenzzähler 6 für die hohe Taktfrequenz vorgegeben. Gleichzeitig zu dem Referenzzähler 6 für die hohe Frequenz wird der Zähler 3 für die hohe Frequenz gestartet. Dieser zählt bis zur nächsten positiven Flanke der niederfrequenten Taktfrequenz (32,768 kHz) und wird dann angehalten. Hierdurch wird der Phasenversatz des Taktfrequenzgebers 1 und des Taktfrequenzgebers 2 erfaßt. Von diesem Zeitpunkt an zählt der Zähler 4 für die niedrige Taktfrequenz eine vorgegebene und bekannte Anzahl von Takten (erster Abgleich-Endwert), stoppt am Ende und löst über die Ablaufsteuerung 5 die erneute Freigabe des Zählers 3 für die hohe Taktfrequenz aus. Der Zähler 3 für die hohe Taktfrequenz zählt nun von dem vorherigen Abgleich-Zwischenwert an weiter bis zum exakten Ende des zu vermessenden Abgleich-Zeitraums. Der Abgleich-Zeitraum wird dabei durch den Referenzzähler 6 für die schnelle Taktfrequenz bestimmt, der bei einem vorbestimmten, dem Abgleich-Zeitraum entsprechenden zweiten Abgleich-Endwert stoppt und über die Ablaufsteuerung 5 gleichzeitig das Anhalten der Zählers 3 für die hohe Taktfrequenz auslöst. Der ermittelte Endwert des Zählers 3 für die hohe Taktfrequenz wird als Referenzwert für die hohe Taktfrequenz festgelegt und beispielsweise in der Ablaufsteuerung 5 gespeichert. Der Abgleich-Zeitraum liegt nun durch eine bekannte Anzahl niederfrequenter Takte (erster Abgleich-Endwert) und eine ermittelte Anzahl hochfrequenter Takte (Referenzwert für die hohe Taktfrequenz) fest. Gleichzeitig wurde die Phasenbeziehung des Taktfrequenzgebers 1 für die hohe Taktfrequenz und des Taktfrequenzgebers 2 für die niedrige Taktfrequenz berücksichtigt. Die exakte Frequenz des Taktfrequenzgebers 2 für die niedrige Taktfrequenz wird nicht explizit ausgegeben, ist aber in der Summe der Zählerstände des Zählers 3 und des Zählers 4 enthalten.

Für die Anwendung des erfindungsgemäßen Verfahrens und der erfindungsgemäßen Vorrichtung bei einer Mobilstation eines GSM-Mobilfunksystemes ist es erforderlich, eine zeitliche Auflösung von einem TDMA-Rahmen zu erzielen. Dies erreicht man, indem der durch den Zähler 3 für die hohe Taktfrequenz über 16 TDMA-Rahmen ermittelte Referenzwert für die hohe Taktfrequenz durch 16 dividiert wird. Durch die Software in der Mobilstation wird vorgegeben, welches ganzzahliges Vielfaches m der TDMA-Rahmenlänge (GSM-Rahmenlänge) die Umschalt-Zeitdauer umfassen soll. Es sind dabei alle ganzzahligen Werte bis zu einem Maximalwert möglich.

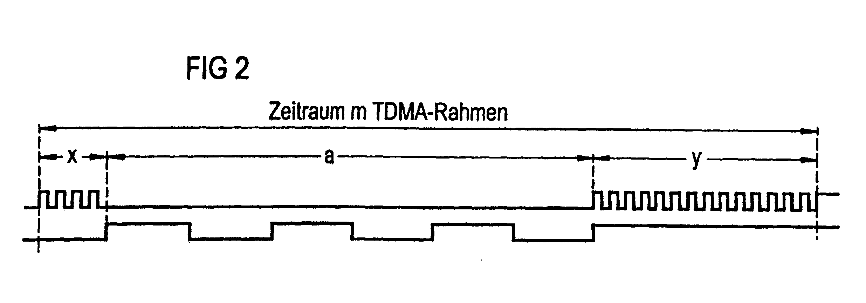

Um das Umschalten der Taktfrequenzgeber zu starten, definiert die Ablaufsteuerung 5 der erfindungsgemäßen Vorrichtung beispielsweise eine Mobilstation, einen Impuls, welcher den Zähler 3 für die hohe Taktfrequenz synchron zum Zeitraster des GSM-Rasters aktiviert. Der Zähler 3 für die hohe Frequenz zählt bis zur nächsten positiven Flanke der niedrigen Taktfrequenz und stoppt dann, wodurch der Phasenversatz x (vgl. Fig. 2) erfaßt wird. Anschließend beginnt der Zähler 4 für die niedrige Taktfrequenz zu zählen. Parallel dazu wird der Taktgeber 1 für die hohe Taktfrequenz durch die Ablaufsteuerung 5 deaktiviert bzw. abgeschaltet. Der Zähler 4 für die niedrige Frequenz zählt bis zu einem ersten Endwert, der auf der Basis des beim Abgleichen verwendeten vorbestimmten ersten Abgleich-Endwertes ermittelt wurde. Im erläuterten Beispiel wurde der erste Endwert durch Dividieren des beim Abgleichen verwendeten ersten Abgleich-Endwertes durch 16 und durch Multiplikation mit dem ganzzahligen Vielfachen m der GSM-Rahmenlänge ermittelt wurde.

Kurz vor oder synchron zum Anhalten des Zählers 4 für die niedrige Taktfrequenz bei dem ersten Endwert wird der erste Taktfrequenzgeber 1 für die hohe Taktfrequenz wieder aktiviert bzw. gestartet. Unmittelbar nach dem Anhalten des Zählers 4 für die langsame Taktfrequenz aktiviert die Ablaufsteuerung 5 erneut den Zähler 3 für die hohe Taktfrequenz, der ab dem vorher festgelegten Zwischenwert weiter bis zu dem zweiten Endwert zählt. Der zweite Endwert wurde auf der Basis des beim Abgleichen erhaltenen Referenzwertes für die schnelle Taktfrequenz ermittelt. Im erläuterten Beispiel wurde der zweite Endwert durch Dividieren des beim Abgleichen erhaltenen Referenzwertes durch n und durch Multiplizieren mit m ermittelt.

Damit wird während dem Zeitraum a (vgl. Fig. 2), in dem der Zähler 4 für die niedrige Taktfrequenz läuft, der Taktgeber 1 für die hohe Taktfrequenz ausgeschaltet. Der Zeitraum y (vgl. Fig. 2), in dem der Zähler 3 für die hohe Taktfrequenz ab dem Zwischenwert bis zum zweiten Endwert zählt, definiert die exakte Umschalt-Zeitdauer für die Aufrechterhaltung des vom ersten Taktfrequenzgeber für die hohe Taktfrequenz vorgegebenen Zeitrasters. Um den bei der Ermittlung des ersten Endwertes und des zweiten Endwertes auftretenden Teilungsrest zu berücksichtigen, ist es erforderlich, diesem über die Anzahl m der GSM-Rahmenlängen der Umschalt-Zeitdauer zu akkumulieren. Demgemäß wird nach dem Anhalten der Zählers 3 für die hohe Taktfrequenz der Restzähler 7 für die hohe Taktfrequenz gestartet und zählt bis zum Ende des durch die Multiplikation der Zahl m mit dem Divisionsrest erhaltenen Endwert. Wird dieser Endwert erreicht, stoppt der Restzähler 7 und das Ende der vorgegebenen Umschalt-Zeitdauer als ganzzahliges Vielfaches m der GSM-Rahmenlänge ist erreicht. Danach kann die Mobilstation synchron zur hohen Taktfrequenz wieder auf die erste Taktgebereinheit für die hohe Taktfrequenz umgeschaltet werden.

Das gezielte Schalten des Zählers 3 für die hohe Taktfrequenz, des Zählers 4 für die niedrige Taktfrequenz, des Restzählers 7 für die hohe Taktfrequenz und des Referenzzählers 6 für die hohe Taktfrequenz wird von der Ablaufsteuerung 5 durchgeführt. Der Zeitraum a, in dem der Zähler 4 für die niedrige Taktfrequenz läuft und der erste Taktfrequenzgeber 1 für die hohe Taktfrequenz in der Mobilstation abgeschaltet ist, ist erheblich länger als der Zeitraum (x + y), in dem der erste Taktfrequenzgeber 1 für die hohe Taktfrequenz während der gesamten Umschalt-Zeitdauer aktiviert ist. Da der zweite Taktfrequenzgeber 2 für die niedrige Taktfrequenz einen wesentlich niedrigeren Stromverbrauch als der erste Taktfrequenzgeber 1 für die hohe Taktfrequenz hat, stellt sich damit eine Reduzierung des mittleren Stromverbrauchs der Mobilstation ein. In Fig. 2 ist zur Verdeutlichung eine Umschalt-Zeitdauer aus m GSM-Rahmen dargestellt. Die Umschalt-Zeitdauer setzt sich, wie oben erläutert wurde, aus den Zeiträumen x, a und y zusammen, wobei der Zeitraum a den Zeitraum kennzeichnet, in dem der zweite Taktfrequenzgeber 2 die Funktion des ersten Taktfrequenzgebers 1 für die hohe Taktfrequenz übernimmt und diese deaktiviert ist. In den Zeiträumen x und y ist der erste Taktfrequenzgeber aktiviert, was durch die hochfrequente Rechteckkurve dargestellt ist. Die Anzahl x von Takten hoher Frequenz erfaßt den Phasenversatz der beiden Taktsysteme und die Anzahl y an Takten hoher Frequenz definiert die exakte Umschalt-Zeitdauer.

## Patentansprüche

1. Verfahren zur Aufrechterhaltung eines durch eine von einem ersten Taktfrequenzgeber (1) erzeugte hohe Taktfrequenz vorgegebenen Zeitrasters, wobei für eine Umschalt-Zeitdauer im wesentlichen auf eine von einem zweiten Taktfrequenzgeber (2) erzeugte niedrige Taktfrequenz umgeschaltet wird, **gekennzeichnet durch** die Schritte :
a) Abgleichen der niedrigen und der hohen Taktfrequenz während einem Abgleich-Zeitraum,
b) Starten eines Zählers (3) für die hohe Taktfrequenz,
c) Anhalten des Zählers (3) für die hohe Taktfrequenz in Abhängigkeit von der niedrigen Taktfrequenz unter Festlegung eines Zwischenwertes und unmittelbar darauffolgendes
d) Starten eines Zählers (4) für die niedrige Taktfrequenz,
e) Deaktivieren des ersten Taktfrequenzgebers (1),
f) Anhalten des Zählers (4) für die niedrige Taktfrequenz bei einem ersten Endwert, der auf der Basis eines beim Abgleichen verwendeten vorbestimmten ersten Abgleich-Endwertes ermittelt wurde, nach dem Aktivieren des ersten Taktfrequenzgebers (1) und unmittelbar darauffolgendes
g) erneutes Starten des Zählers (3) für die hohe Taktfrequenz ab dem Zwischenwert, und
h) Anhalten des Zählers (3) für die hohe Taktfrequenz bei einem zweiten Endwert, der auf der Basis eines beim Abgleichen erhaltenen Referenzwertes für die hohe Taktfrequenz ermittelt wurde.

2. Verfahren nach Anspruch 1,
**dadurch gekennzeichnet,**
**daß** beim Abgleichen der niedrigen und der hohen Taktfrequenz folgende Schritte durchgeführt werden
a1) Starten des Zählers (3) für die schnelle Taktfrequenz gleichzeitig mit einem Referenzzähler (6) für die hohe Taktfrequenz,
a2) Anhalten des Zählers (3) für die schnelle Taktfrequenz in Abhängigkeit von der niedrigen Taktfrequenz unter Festlegung eines Abgleich-Zwischenwertes und unmittelbar darauffolgendes
a3) Starten des Zählers (4) für die niedrige Taktfrequenz,
a4) Anhalten des Zählers (4) für die hohe Taktfrequenz bei dem vorbestimmten ersten Abgleich-Endwert und unmittelbar darauffolgendes
a5) erneutes Starten des Zählers (3) für die hohe Taktfrequenz ab dem Abgleich-Zwischenwert, und
a6) Anhalten des Zählers (3) für die hohe Taktfrequenz gleichzeitig mit dem Referenzzähler (6) für die hohe Taktfrequenz bei einem für den Referenzzähler (6) vorbestimmten dem Abgleich-Zeitraum entsprechenden zweiten Abgleich-Endwert, wobei der Zählerstand des Zählers (3) für die hohe Taktfrequenz als Referenzwert für die hohe Taktfrequenz festgelegt wird.

3. Verfahren nach Anspruch 1 oder 2,
**dadurch gekennzeichnet,**
**daß** das Anhalten des Zählers (3) für die hohe Taktfrequenz in den Schritten c) und/oder a2) bei der nächsten positiven Flanke der niedrigen Taktfrequenz nach dem Starten des Zählers (3) für die hohe Taktfrequenz erfolgt.

4. Verfahren nach einem der vorhergehenden Ansprüche,
**dadurch gekennzeichnet,**
**daß** es in einer Mobilstation eines Mobilfunksystems verwendet wird.

5. Verfahren nach Anspruch 4,
**dadurch gekennzeichnet,**
**daß** das Mobilfunksystem auf dem GSM-Standard beruht, wobei die Länge der Umschalt-Zeitdauer ein ganzzahliges Vielfaches m der GSM-Rahmenlänge und die Länge des Abgleich-Zeitraums ein ganzzahliges Vielfaches n der GSM-Rahmenlänge ist.

6. Verfahren nach Anspruch 5,
**dadurch gekennzeichnet,**
**daß** der erste Endwert durch Teilen des vorbestimmten ersten Abgleich-Endwertes durch n und durch Multiplizieren mit m und/oder der zweite Endwert durch Teilen des beim Abgleichen erhaltenen Referenzwertes durch n und durch Multiplizieren mit m ermittelt werden.

7. Verfahren nach Anspruch 6,
**dadurch gekennzeichnet,**
**daß** ein beim Teilen des ersten und/oder zweiten Endwertes durch n auftretender Teilungsrest mit m multipliziert und unmittelbar nach Schritt h) ein Restzähler (7) gestartet wird, der bei dem mit m multiplizierten Teilungsrest angehalten wird.

8. Vorrichtung zur Aufrechterhaltung eines durch eine hohe Taktfrequenz vorgegebenen Zeitrasters, wobei für eine bestimmte Umschalt-Zeitdauer im wesentlichen auf eine niedrige Taktfrequenz umgeschaltet wird, mit
einem Taktfrequenzgeber (1) für die hohe Taktfrequenz,
einem Taktfrequenzgeber (2) für die niedrige Taktfrequenz,
einem Zähler (3) für die hohe Taktfrequenz,
einem Zähler (4) für die niedrige Taktfrequenz und
einer Ablaufsteuerung (5) **gekennzeichnet durch** die Schritte:
a) Abgleichen der niedrigen und der hohen Taktfrequenz während einem Abgleich-Zeitraum,
b) Starten des Zählers (3) für die hohe Taktfrequenz,
c) Anhalten des Zählers (3) für die hohe Taktfrequenz in Abhängigkeit von der niedrigen Taktfrequenz unter Festlegung eines Zwischenwertes und unmittelbar darauffolgendes
d) Starten des Zählers (4) für die niedrige Taktfrequenz,
e) Deaktivieren des ersten Taktfrequenzgebers (1),
f) Anhalten des Zählers (4) für die niedrige Taktfrequenz bei einem ersten Endwert, der auf der Basis eines beim Abgleichen verwendeten vorbestimmten ersten.Abgleich-Endwertes ermittelt wurde, nach dem Aktivieren des ersten Taktfrequenzgebers (1) und unmittelbar darauffolgendes
g) erneutes Starten des Zählers (3) für die hohe Taktfrequenz ab dem Zwischenwert, und
h) Anhalten des Zählers (3) für die hohe Taktfrequenz bei einem zweiten Endwert, der auf der Basis eines beim Abgleichen erhaltenen Referenzwertes für die hohe Taktfrequenz ermittelt wurde.

9. Vorrichtung nach Anspruch 8,
**gekennzeichnet durch**
einen Referenzzähler (6) für die hohe Taktfrequenz, wobei die Ablaufsteuerung (5) beim Abgleichen der niedrigen und der hohen Taktfrequenz folgende Schritte durchführt
a1) Starten des Zählers (3) für die hohe Taktfrequenz gleichzeitig mit dem Referenzzähler (6) für die hohe Taktfrequenz,
a2) Anhalten des Zählers (3) für die hohe Taktfrequenz in Abhängigkeit von der niedrigen Taktfrequenz unter Festlegung eines Abgleich-Zwischenwertes und unmittelbar darauffolgendes
a3) Starten eines Zählers (4) für die niedrige Taktfrequenz,
a4) Anhalten des Zählers (4) für die niedrige Taktfrequenz bei dem vorbestimmten ersten Abgleich-Endwert und unmittelbar darauffolgendes
a5) erneutes Starten des Zählers (3) für die hohe Taktfrequenz ab dem Abgleich-Zwischenwert, und
a6) Anhalten des Zählers (3) für die hohe Taktfrequenz gleichzeitig mit dem Referenzzähler (6) für die hohe Taktfrequenz bei einem für den Referenzzähler (6) vorbestimmten dem Abgleich-Zeitraum entsprechenden zweiten Abgleich-Endwert, wobei der Zählerstand des Zählers (3) für die hohe Taktfrequenz als Referenzwert für die hohe Taktfrequenz festgelegt wird.

10. Vorrichtung nach Anspruch 8 oder 9,
**dadurch gekennzeichnet,**
**daß** die Ablaufsteuerung (5) den Zähler (3) für die hohe Taktfrequenz in den Schritten c) und/oder a2) bei der nächsten positiven Flanke der niedrigen Taktfrequenz nach dem Starten des Zählers (3) für die hohe Taktfrequenz anhält.

11. Mobilstation eines Mobilfunksystems,
**gekennzeichnet durch**
eine Vorrichtung nach einem der Ansprüche 8 bis 10.

12. Mobilstation nach Anspruch 11,
**dadurch gekennzeichnet,**
**daß** das Mobilfunksystem auf dem GSM-Standard beruht, wobei die Länge der Umschalt-Zeitdauer ein ganzzahliges Vielfaches m der GSM-Rahmenlänge und die Länge des Abgleich-Zeitraums ein ganzzahliges Vielfaches n der GSM-Rahmenlänge ist.

13. Mobilstation nach Anspruch 12,
**dadurch gekennzeichnet,**
**daß** die Ablaufsteuerung (5) den ersten Endwert durch Teilen des vorbestimmten ersten Abgleich-Endwertes durch n und durch Multiplizieren mit m und den zweiten Endwert durch Teilen des beim Abgleichen erhaltenen Referenzwertes durch n und durch Multiplizieren mit m ermittelt.

14. Mobilstation nach Anspruch 13,
**gekennzeichnet durch**
einen Restzähler (7), wobei die Ablaufsteuerung einen beim Teilen des ersten und/oder zweiten Endwertes **durch** n auftretenden Teilungsrest mit m multipliziert und unmittelbar nach Schritt h) den Restzähler (7) startet und bei dem mit m multiplizierten Teilungsrest anhält.

## Claims

1. Method for maintaining a time reference which is governed by a high clock frequency produced by a first clock frequency transmitter (1), in which a changeover is essentially made, for a changeover time period, to a low clock frequency produced by a second clock frequency transmitter (2), **characterized by** the following steps
a) trimming the low and high clock frequencies during a trimming time period,
b) starting a counter (3) for the high clock frequency,
c) stopping the counter (3) for the high clock frequency as a function of the low clock frequency, defining an intermediate value and, immediately after this,
d) starting a counter (4) for the low clock frequency,
e) deactivating the first clock frequency transmitter (1),
f) stopping the counter (4) for the low clock frequency at a first final value, which has been determined on the basis of a predetermined first final trimming value used for trimming, after the activation of the first clock frequency transmitter (1) and, immediately after this,
g) restarting the counter (3) for the high clock frequency from the intermediate value, and
h) stopping the counter (3) for the high clock frequency at a second final value, which has been determined on the basis of a reference value, obtained during trimming, for the high clock frequency.

2. Method according to Claim 1,
**characterized**
**in that** the following steps are carried out for trimming the low and high clock frequencies:
a1) starting the counter (3) for the fast clock frequency at the same time as a reference counter (9) for the high clock frequency,
a2) stopping the counter (3) for the fast clock frequency as a function of the low clock frequency, defining an intermediate trimming value and, immediately after this,
3) starting the counter (4) for the low clock frequency,
a4) stopping the counter (4) for the high clock frequency at the predetermined first final trimming value and, immediately after this,
a5) restarting the counter (3) for the high clock frequency from the intermediate trimming value, and
a6) stopping the counter (3) for the high clock frequency at the same time as the reference counter (6) for the high clock frequency at a second final trimming value which is predetermined for the reference counter (6) and corresponds to the trimming time period, in which case the count of the counter (3) for the high clock frequency is defined as the reference value for the high clock frequency.

3. Method according to Claim 1 or 2,
**characterized**
**in that** the counter (3) for the high clock frequency is stopped, in steps c) and/or a2) at the next positive flank of the low clock frequency after the starting of the counter (3) for the high clock frequency.

4. Method according to one of the preceding claims,
**characterized**
**in that** said method is used in a mobile station in a mobile radio system.

5. Method according to Claim 4,
**characterized**
**in that** the mobile radio system is based on the GSM Standard, with the length of the changeover time period being an integer multiple m of the GSM frame length, and with the length of the trimming time period being an integer multiple n of the GSM frame length.

6. Method according to Claim 5,
**characterized**
**in that** the first final value is determined by dividing the predetermined first final trimming value by n and by multiplying it by m, and/or the second final value is determined by dividing the reference value obtained during trimming by n and by multiplying it by m.

7. Method according to Claim 6,
**characterized**
**in that** a division remainder which occurs when dividing the first and/or second final value by n is multiplied by m and, immediately after step h), a remainder counter (7) is started, and is stopped at the division remainder multiplied by m.

8. Apparatus for maintaining a time reference which is governed by a high clock frequency, in which a changeover is essentially made to a low clock frequency for a specific changeover time period, having
a clock frequency transmitter (1) for the high clock frequency,
a clock frequency transmitter (2) for the low clock frequency,
a counter (3) for the high clock frequency,
a counter (4) for the low clock frequency, and
a sequence controller (5), **characterized by** the following steps:
a) trimming the low and high clock frequencies during a trimming time period,
b) starting the counter (3) for the high clock frequency,
c) stopping the counter (3) for the high clock frequency as a function of the low clock frequency, defining an intermediate value and, immediately after this,
d) starting the counter (4) for the low clock frequency,
e) deactivating the first clock frequency transmitter (1),
f) stopping the counter (4) for the low clock frequency at a first final value, which has been determined on the basis of a predetermined first final trimming value used for trimming, after the activation of the first clock frequency transmitter (1) and, immediately after this,
g) restarting the counter (3) for the high clock frequency from the intermediate value, and
h) stopping the counter (3) for the high,clock frequency at a second final value, which has been determined on the basis of a reference value, obtained during trimming, for the high clock frequency.

9. Apparatus according to Claim 8,
**characterized by**
a reference counter (6) for the high clock frequency, in which case the sequence controller (5) carries out the following steps during trimming of the low and high clock frequencies,
a1) starting the counter (3) for the high clock frequency at the same time as the reference counter (9) for the high clock frequency,
a2) stopping the counter (3) for the high clock frequency as a function of the low clock frequency, defining an intermediate trimming value and, immediately after this,
a3) starting a counter (4) for the low clock frequency,
a4) stopping the counter (4) for the low clock frequency at the predetermined first final trimming value and, immediately after this,
a5) restarting the counter (3) for the high clock frequency from the intermediate trimming value, and
a6) stopping the counter (3) for the high clock frequency at the same time as the reference counter (6) for the high clock frequency at a second final trimming value which is predetermined for the reference counter (6) and corresponds to the trimming time period, in which case the count of the counter (3) for the high clock frequency is defined as the reference value for the high clock frequency.

10. Apparatus according to Claim 8 or 9,
**characterized in that** the sequence controller (5) stops the counter (3) for the high clock frequency in steps c) and/or a2) at the next positive flank of the low clock frequency after the starting of the counter (3) for the high clock frequency.

11. Mobile station in a mobile radio system,
**characterized by**
an apparatus according to one of Claims 8 to 10.

12. Mobile station according to Claim 11,
**characterized**
**in that** the mobile radio system is based on the GSM Standard, with the length of the changeover time period being an integer multiple m of the GSM frame length, and with the length of the trimming time period being an integer multiple n of the GSM frame length.

13. Mobile station according to Claim 12,
**characterized**
**in that** the sequence controller (5) determines the first final value by dividing the predetermined first final trimming value by n and by multiplying it by m, and determines the second final value by dividing the reference value obtained during trimming by n and by multiplying it by m.

14. Mobile station according to Claim 13,
**characterized by**
a remainder counter (7), in which case the sequence controller multiplies a division remainder, which occurs when dividing the first and/or second final value by n, by m and, immediately after step h), starts the remainder counter (7) and stops it at the division remainder multiplied by m.

## Revendications

1. Procédé pour le maintien d'une trame temporelle prédéterminée par une haute fréquence d'horloge créée par un premier émetteur de fréquence d'horloge (1), avec basculement pendant une durée de commutation essentiellement sur une basse fréquence d'horloge créée par un deuxième émetteur de fréquence d'horloge (2), **caractérisé par** les étapes qui consistent à:
a) accorder la basse fréquence d'horloge et la haute fréquence d'horloge pendant une durée d'accord,
b) lancer un compteur (3) pour la haute fréquence d'horloge,
c) maintenir le compteur (3) à la haute fréquence d'horloge en fonction de la basse fréquence d'horloge en définissant une valeur intermédiaire, et immédiatement après,
d) lancer le compteur pour la basse fréquence d'horloge,
e) désactiver le premier émetteur de fréquence d'horloge (1),
f) maintenir le compteur (4) pour la basse fréquence d'horloge à une première valeur finale qui a été déterminée sur base d'une première valeur finale d'accord prédéterminée et utilisée pour l'accord, après l'activation du premier émetteur de fréquence d'horloge (1), et immédiatement ensuite
g) relancer le compteur (3) pour la haute fréquence d'horloge à partir de la valeur intermédiaire et
h) maintenir le compteur pour la haute fréquence d'horloge à une deuxième valeur finale qui a été déterminée sur base d'une valeur de référence de la haute fréquence d'horloge qui a été obtenue lors de l'accord.

2. Procédé selon la revendication 1, **caractérisé en ce que** lors de l'accord entre la basse fréquence d'horloge et la haute fréquence d'horloge, on réalise les étapes suivantes :
a1) lancement du compteur (3) pour la fréquence d'horloge rapide en même temps que d'un compteur de référence (6) pour la haute fréquence d'horloge,
a2) maintien du compteur (3) pour la fréquence d'horloge rapide en fonction de la basse fréquence d'horloge en définissant une valeur intermédiaire d'accord, avec immédiatement ensuite
a3) lancement du compteur (4) pour la basse fréquence d'horloge,
a4) maintien du compteur (4) pour la haute fréquence d'horloge à la première valeur finale d'accord prédéterminée, et immédiatement ensuite
a5) nouveau lancement du compteur (3) pour la haute fréquence à partir de la valeur intermédiaire d'accord et
a6) maintien du compteur (3) pour la haute fréquence en même temps que le compteur de référence (6) pour la haute fréquence à une deuxième valeur finale d'accord prédéterminée pour le compteur de référence (6) et qui correspond à la durée de comparaison, l'état du compteur (3) pour la haute fréquence d'horloge étant défini comme valeur de référence pour la haute fréquence d'horloge.

3. Procédé selon la revendication 1 ou 2, **caractérisé en ce que** le maintien du compteur (3) pour la haute fréquence d'horloge pendant les étapes c) et/ou a2) s'effectue sur le flanc positif de la basse fréquence d'horloge qui suit le lancement du compteur (3) pour la haute fréquence d'horloge.

4. Procédé selon l'une des revendications précédentes, **caractérisé en ce qu'**il est utilisé dans un poste mobile d'un système de radiotéléphonie mobile.

5. Procédé selon la revendication 4, **caractérisé en ce que** le système de radiotéléphonie mobile est basé sur la norme GSM, la longueur de la durée de commutation étant un multiple entier m de la longueur des fenêtres GSM et la longueur de la durée d'accord étant un multiple entier n de la longueur des fenêtres GSM.

6. Procédé selon la revendication 5, **caractérisé en ce que** la première valeur finale est obtenue par division par n et par multiplication par m de la première valeur finale de compensation et/ou la deuxième valeur finale est obtenue par division par n et par multiplication par m de la valeur de référence obtenue lors de l'accord.

7. Procédé selon la revendication 6, **caractérisé en ce qu'**un reste de division obtenu lors de la division par n de la première et/ou de la deuxième valeur finale est multiplié par m et **en ce qu'**immédiatement après l'étape h), un compteur de reste (7) est lancé et est maintenu sur le reste de la division multiplié par m.

8. Dispositif pour le maintien d'une trame temporelle prédéterminée par une haute fréquence d'horloge, avec basculement essentiellement sur. une basse fréquence d'horloge pendant une durée de commutation définie, avec:
un émetteur de fréquence d'horloge (1) pour la haute fréquence d'horloge,
un émetteur de fréquence d'horloge (2) pour la basse fréquence d'horloge,
un compteur (3) pour la haute fréquence d'horloge,
un compteur (4) pour la basse fréquence d'horloge et
une commande de déroutement (5), **caractérisé par** les étapes qui consistent à:
a) accorder la basse fréquence d'horloge et la haute fréquence d'horloge pendant une durée d'accord,
b) lancer le compteur (3) pour la haute fréquence d'horloge,
c) maintenir le compteur (3) pour la haute fréquence d'horloge en fonction de la basse fréquence d'horloge en définissant une valeur intermédiaire, et immédiatement après,
d) lancer le compteur (4) pour la basse fréquence d'horloge,
e) désactiver le premier émetteur de fréquence d'horloge (1),
f) maintenir le compteur (4) pour la basse fréquence d'horloge à une première valeur finale qui a été déterminée sur base d'une première valeur finale d'accord prédéterminée et utilisée pour l'accord, après l'activation du premier émetteur de fréquence d'horloge (1 ), et immédiatement ensuite
g) relancer le compteur (3) pour la haute fréquence d'horloge à partir de la valeur intermédiaire et
h) maintenir le compteur (3) pour la haute fréquence d'horloge à une deuxième valeur finale qui a été déterminée sur base d'une valeur de référence de la haute fréquence d'horloge qui a été obtenue lors de l'accord.

9. Dispositif selon la revendication 8, **caractérisé par** un compteur de référence (6) pour la haute fréquence d'horloge, la commande de déroulement (5) exécutant lors de la compensation entre la basse et la haute fréquence d'horloge les étapes suivantes :
a1) lancement du compteur (3) pour la haute fréquence d'horloge en même temps qu'un compteur de référence (6) pour la haute fréquence d'horloge,
a2) maintien du compteur (3) pour la haute fréquence d'horloge en fonction de la basse fréquence d'horloge en définissant une valeur intermédiaire d'accord, avec immédiatement ensuite
a3) lancement d'un compteur (4) pour la basse fréquence d'horloge,
a4) maintien du compteur (4) pour la basse fréquence d'horloge à la première valeur finale d'accord prédéterminée, et immédiatement ensuite
a5) nouveau lancement du compteur (3) pour la haute fréquence d'horloge à partir de la valeur intermédiaire d'accord et
a6) maintien du compteur (3) pour la haute fréquence en même temps que le compteur de référence (6) pour la haute fréquence à une deuxième valeur finale d'accord prédéterminée pour le compteur de référence (6) et qui correspond à la durée de comparaison, l'état du compteur (3) pour la haute fréquence d'horloge étant défini comme valeur de référence pour la haute fréquence d'horloge.

10. Dispositif selon la revendication 8 ou 9, **caractérisé en ce que** la commande de déroulement (5) maintient le compteur (3) pour la haute fréquence d'horloge dans les étapes c) et/ou a2) lors du flanc positif de la basse fréquence d'horloge qui suit le lancement du compteur (3) pour la haute fréquence d'horloge.

11. Poste mobile d'un système de radiotéléphonie mobile, **caractérisé par** un dispositif selon l'une des revendications 8 à 10.

12. Poste mobile selon la revendication 11, **caractérisé en ce que** le système de radiotéléphonie mobile est basé sur la norme GSM, la longueur de la durée de commutation étant un multiple entier m de la longueur des fenêtres GSM et la longueur de la durée d'accord étant un multiple entier n de la longueur des fenêtres GSM.

13. Poste mobile selon la revendication 12, **caractérisé en ce que** la commande de déroulement (5) calcule la première valeur finale par division par n et par multiplication par m de la première valeur finale de compensation et la deuxième valeur finale par division par n et par multiplication par m de la valeur de référence obtenue lors de l'accord.

14. Poste mobile selon la revendication 13, **caractérisé par** un compteur de reste (7) et dans lequel la commande de déroulement multiplie par m le reste de division obtenu lors de la division par n de la première et/ou de la deuxième valeur finale et en ce qu'immédiatement après l'étape h), elle lance un compteur de reste (7) et le maintient sur le reste de la division multiplié par m.
